# EUROPÄISCHE PATENTSCHRIFT

(11) **EP 2 524 636 B1**
(45) Veröffentlichungstag und Bekanntmachung des Hinweises auf die Patenterteilung: **14.01.2015**
(21) Anmeldenummer: 12401084.4
(22) Anmeldetag: 08.05.2012
(51) Int. Cl.: A47J 31/42, A47J 42/06, A47J 42/16

(54) **Getränkebereiter mit Mahlvorrichtung**
Beverage preparation machine with grinding device
Dispositif de préparation de boissons avec dispositif de broyage

(30) Priorität: 19.05.2011 DE 102011050486
(43) Veröffentlichungstag der Anmeldung: 21.11.2012
(73) Patentinhaber: Miele & Cie. KG, 33332 Gütersloh (DE)
(72) Erfinder: Fuhrmann, Rainer, 33818 Leopoldshöhe (DE); Heinisch, Oliver, 33609 Bielefeld (DE); Tembaak, Jutta, 49492 Westerkappeln (DE)

(56) Entgegenhaltungen:
- EP-A1- 1 994 866
- EP-A1- 2 067 421
- WO-A1-2009/152761
- DE-C- 814 505
- DE-U1- 8 524 661
- DE-U1- 9 115 709

## Beschreibung

Die Erfindung betrifft einen Getränkebereiter, insbesondere eine Kaffeemaschine, mit einer mit Mahlgut, insbesondere Kaffeebohnen, beschickbaren Mahlvorrichtung, aufweisend ein Mahlwerk mit einem während eines Mahlvorgangs rotierenden ersten Mahlelement und mit einem zweiten Mahlelement, eine Öffnung zu einem Pulverschacht, durch den gemahlenes Pulver aus der Mahlvorrichtung zu einer Brüheinheit gelangen kann, und ein erstes, rotierbares Begrenzungselement zum Heraustreiben von Kaffeepulver aus der Öffnung.

Derartige Getränkebereiter werden bereits von etlichen Herstellern angeboten. Meist weisen diese ein Kegelmahlwerk auf, wobei das Mahlgut von oben in das Mahlwerk hineingelangt, dort von zwei Mahlelementen gemahlen wird und das gemahlene Pulver anschließend in einen darunter liegenden Bereich des Mahlwerks gelangt. Dort befindet sich an der Seitenwand der Mahlvorrichtung eine Öffnung zu einem Pulverschacht, welcher in horizontaler Richtung zu der neben der Mahlvorrichtung angeordneten Brüheinheit führt. Typischerweise ist der Boden der Mahlvorrichtung rotierend ausgebildet, wodurch das Pulver aus der Mahlvorrichtung durch die Öffnung in den Pulverschacht gelangt.

Nachteilig an den bekannten Getränkebereitern ist jedoch, dass sich zwischen der Mahlvorrichtung und der Brüheinheit bei gewöhnlicher Benutzung stets eine erhebliche Menge gemahlenen Pulvers befindet bzw. nach dem Mahlvorgang verbleibt. Dadurch erhält der Benutzer ein Getränk, welches aus Pulver bereitet ist, welches vollständig oder mindestens zu einem nicht vernachlässigbaren Teil von einem früheren und nicht oder nicht allein von dem vom Benutzer unmittelbar durch Zuführung von frischem Mahlgut eingeleiteten Mahlvorgang stammt. Insbesondere im Fall von Kaffee ist es wegen der flüchtigen Aromastoffe des Kaffees jedoch wünschenswert, wenn das Mahlen der Bohnen unmittelbar vor dem Brühen erfolgt.

Die EP 1 994 866 A1 offenbart ein Mahlwerk mit einem während eines Mahlvorgangs rotierenden ersten Mahlelement und mit einem zweiten Mahlelement, eine Öffnung, durch den gemahlenes Pulver aus der Mahlvorrichtung zum Getränkebereiter gelangen kann. Die EP 1 994 866 A1 offenbart ferner allgemein, dass ein Schabelement vorhanden ist, um bodenseitigen Kaffee zur Öffnung zu schieben.

Die WO 2009/152761 A1 offenbart eine Kaffeemühle, um gemahlenen Kaffee in einen Behälter unter Beaufschlagung einer Kompression einzufüllen. Das bewegliche Mahlwerksteil ist mit einer Scheibe gekoppelt, die stegförmige Anformungen besitzt. Aufgrund der Rotation dieser Scheibe wird durch die Anformungen oder Stege eine Luftströmung erzeugt, ähnlich

einer Flügelradpumpe, wodurch das auf die Scheibe fallende Pulver nach außen zur Auslassöffnung gefördert wird.

Die DE 814 505 C oder DE 91 15 709 U1 offenbaren allgemein eine Kaffeemühle mit seitlicher Öffnung zum Heraustreten lassen des Pulvers.

Die EP 2 067 421 A1 offenbart eine Kaffeemaschine mit Mahlwerk, die zur besseren Zuführung der Bohnen zum Mahlwerk einen Brecher umfasst, der innerhalb des Vorratsbehälters rotiert.

Der Erfindung stellt sich das Problem, einen verbesserten Getränkebereiter bereitzustellen, bei dem das angeforderte Getränk bei gleichbleibender Kompaktheit des Getränkebereiters und ohne zusätzlichen Aufwand für den Benutzer stets ausschließlich oder nahezu ausschließlich mit frisch gemahlenem Pulver gebrüht wird.

Erfindungsgemäß wird dieses Problem durch einen Getränkebereiter mit den Merkmalen des Patentanspruchs 1 gelöst. Vorteilhafte Ausgestaltungen und Weiterbildungen der Erfindung ergeben sich aus den abhängigen Ansprüchen.

Es wurde erkannt, dass bei einem Getränkebereiter der eingangs genannten Art ein Verbleiben von gemahlenem Mahlgut im Getränkebereiter, insbesondere in der Mahlvorrichtung, nach Abschluss des Mahlvorgangs vermieden oder dessen Menge verringert werden kann, wenn die Mahlvorrichtung mindestens ein Schabelement aufweist, das relativ zu dem ersten Begrenzungselement bewegt werden kann und eine erste Schabfläche aufweist, die so angeordnet ist, dass am ersten Begrenzungselement anhaftendes oder darauf befindliches Pulver mit dem Schabelement von dem ersten Begrenzungselement abgestreift werden kann.

Somit wird bei einer späteren Nutzung des Getränkebereiters, bei dem eine neue Charge Mahlgut gemahlen wird, der Anteil von beim Aufbrühen verwendetem gemahlenen Pulver, der noch aus einem vorangegangenen Mahlvorgang stammt, deutlich verringert. Dies hat eine positive Wirkung auf den Geschmack des Getränkes. Außerdem kann das Gerät flexibler verwendet werden, da das Mahlgut (z.B. Kaffeebohnensorte) und der Mahlgrad von Gebrauch zu Gebrauch variiert werden kann, ohne dass es zu einer relevanten Vermischung des jeweiligen Pulvers kommt. Darüber hinaus werden Verstopfungen innerhalb des Getränkebereiters, insbesondere des Mahlwerks vermieden, was die Haltbarkeit bzw. Standzeit des Getränkebereiters erhöht.

Der erfindungsgemäße Getränkebereiter weist eine mit Mahlgut beschickbare Mahlvorrichtung auf. Von einem Vorratsbehälter wird eine vorgebbare Menge des Mahlguts in die Mahlvorrichtung transportiert, d.h. vorzugsweise weist der Getränkebereiter eine Portionierungseinrichtung auf, mit der abhängig von einer vom Benutzer getätigten Auswahl, z.b. der Getränkeart und/oder-größe, die genau hierfür erforderliche Menge des (ungemahlenen) Mahlgutes automatisch abgemessen wird; diese wird dann der Mahlvorrichtung zugeführt. Für die Gestaltung der Portionierungseinrichtung stehen dem Fachmann verschiedene Lösungen zur Verfügung.

Beim Mahlgut kann es sich insbesondere um Kaffeebohnen handeln. Das Mahlwerk kann beispielsweise ein Scheiben- oder ein Kegelmahlwerk sein, vorzugsweise ist es jedoch als Kegelmahlwerk ausgebildet.

Das Mahlwerk weist zumindest zwei Mahlelemente auf, von denen zumindest ein erstes Mahlelement rotierbar ist, d.h. während eines Mahlvorgangs rotiert; beispielsweise kann bei einem Kegelmahlwerk ein rotierbarer Mahlkegel als erstem Mahlelement von einem feststehenden Mahlring als zweitem Mahlelement umgeben sein. Das Mahlgut wird bei der Rotation des Mahlkegels innerhalb des Mahlrings zerkleinert. Die Mahlvorrichtung weist darüber hinaus eine Öffnung zu einem Pulverschacht auf, durch den gemahlenes Pulver aus der Mahlvorrichtung zu einer Brüheinheit gelangen kann. Außerdem weist die Mahlvorrichtung ein erstes, rotierbares Begrenzungselement auf, welches zum Heraustreiben von Kaffeepulver aus der Öffnung dient. Typischerweise ist dieses erste, rotierbare Begrenzungselement als Boden oder Bodenelement der Mahlvorrichtung, womit die Mahlvorrichtung bzw. dessen für das gemahlene Pulver zur Verfügung stehende Raum nach unten hin abgeschlossen ist, ausgebildet und rotiert während des Mahlvorgangs synchron mit dem ersten Mahlelement, bzw. dem Mahlkegel. Vorzugsweise wird das erste Begrenzungselement ebenfalls durch den Mahlwerksmotor angetrieben. Das von den Mahlelementen typischerweise nach unten entlassene Pulver kommt in Kontakt mit dem ersten Begrenzungselement, wird durch dessen Rotation mitgerissen und erfährt dabei eine radial nach außen wirkende Zentrifugalkraft. Dadurch wird ein Teil des Pulvers schließlich durch die Öffnung, welche vorzugsweise seitlich zum ersten Begrenzungselement, typischerweise an einer seitlichen Begrenzung der Mahlvorrichtung angeordnet ist, in den Pulverschacht hinausgeschleudert. Ein Teil des Pulvers bleibt trotz der aufgrund der Rotation wirkenden Kräfte jedoch zunächst am ersten Begrenzungselement haften.

Erfindungsgemäß weist die Mahlvorrichtung zusätzlich zu dem Mahlwerk ein Schabelement auf. Dieses ist so ausgebildet, dass es relativ zu dem ersten Begrenzungselement bewegt werden kann. Es weist eine erste Schabfläche auf, die so angeordnet ist, dass am ersten Begrenzungselement anhaftendes oder darauf befindliches Pulver mit dem Schabelement von dem ersten Begrenzungselement abgestreift werden kann.

Dabei wird die Haftung des Pulvers vom ersten Begrenzungselement gelöst; das auf diese Weise vom ersten Begrenzungselement losgelöste Pulver gerät anschließend teilweise wiederum in Kontakt mit dem rotierenden ersten Begrenzungselement, wodurch wiederum zumindest ein größerer Teil des Pulvers durch die Öffnung in den Pulverschacht hinausgeschleudert wird. Ein Teil des Pulvers bleibt möglicherweise wiederum haften und wird nochmals mit dem Schabelement gelöst.

Somit wird insgesamt verhindert, dass gemahlenen Pulvers innerhalb der Mahlvorrichtung verbleibt oder dessen Menge zumindest erheblich reduziert.

Die Relativbewegung zwischen dem Schabelement und dem ersten Begrenzungselement kann grundsätzlich entweder durch eine Bewegung des Schabelements erfolgen, oder durch eine Bewegung des ersten Begrenzungselements. Besonders vorgezogen ist es jedoch, wenn sowohl das Schabelement als auch das erste Begrenzungselement selbst bewegt werden, da sich dadurch das Ablagern von Pulverresten am effektivsten verhindern, bzw. das Heraustreiben von Pulverresten am schnellsten erreichen lässt. Außerdem wird die Gefahr eines Blockierens der Vorrichtung erheblich gesenkt bzw. dies nahezu ausgeschlossen.

Vorzugsweise weist der Getränkebereiter daher eine Antriebseinrichtung auf, durch die das mindestens eine Schabelement bewegt, vorzugsweise rotiert werden kann.

Gemäß einer besonders vorgezogenen Ausführungsform der Erfindung werden das Schabelement und das erste Begrenzungselement von derselben Antriebseinrichtung angetrieben. So können das Schabelement und das erste Begrenzungselement etwa gleichermaßen über den Mahlwerksmotor angetrieben werden. Dadurch wird ein kompakter Aufbau und effizienter Betrieb des Getränkebereiters ermöglicht.

Es ist vorteilhaft, wenn das Schabelement, vorzugsweise durch dieselbe Antriebseinrichtung, relativ zum ersten Begrenzungselement mit derselben Rotationsachse, aber geänderter, vorzugsweise verringerter Drehzahl rotiert werden kann. Hierfür ist ein, vorzugsweise mechanisches, Einstellmittel vorhanden; so kann die Antriebseinrichtung etwa ein Zahnradgetriebe umfassen, womit die Bewegung des Schabelements und Drehzahländerung gegenüber dem ersten Begrenzungselement nach Art eines Planetengetriebes bewirkt werden kann. Hierfür kann das mindestens eine Schabelement beispielsweise mit einem Hohlrad verbunden sein, welches eine Innenverzahnung aufweist, in die ein oder mehrere Planetenräder eingreifen. Das zentrale Zahnrad (Sonnenrad) wird von der Antriebseinrichtung (Mahlwerksmotor) angetrieben und sorgt unmittelbar für die Rotation des ersten Mahlelements sowie des ersten Begrenzungselements.

Diese Ausführungsform eignet sich besonders für ein als Kegelmahlwerk ausgebildetes Mahlwerk, bei dem das erste Begrenzungselement als Boden des Mahlwerks ausgebildet ist und mit dem als zentraler Mahlkegel ausgebildeten ersten Mahlelement mitrotiert, wie es etwa bei der Mehrheit der konventionellen Kaffeevollautomaten der Fall ist. Für ein solches erfindungsgemäß ausgebildetes Mahlwerk ist es im Übrigen vorteilhaft, wenn der Boden der Mahlvorrichtung nach außen abfallend ist. Dadurch unterstützt die Schwerkraft des Pulvers eine Bewegung des Pulvers nach außen und somit in Richtung der in den Pulverschacht führenden Öffnung. Auch diese Maßnahme unterstützt somit das Hinausschleudern des Pulvers aus der Öffnung bzw. das möglichst vollständige Entleeren des Mahlwerks.

Typischerweise weist die Mahlvorrichtung darüber hinaus zumindest ein zweites Begrenzungselement auf, welches im Gegensatz zum ersten Begrenzungselement feststehend, d.h. fest eingebaut bzw. nicht bewegbar ist, dieses kann etwa als seitliche Mahlwerksgehäusebegrenzung ausgebildet sein. Auch an diesem zweiten Begrenzungselement können störende Pulverreste haften bleiben. Vorzugsweise kann das Schabelement hierfür auch relativ zu dem zweiten Begrenzungselement bewegt werden. Es weist hierfür eine zweite Schabfläche auf, die so angeordnet ist, dass am zweiten Begrenzungselement anhaftendes Pulver mit dem Schabelement von dem zweiten Begrenzungselement abgestreift werden kann.

Insgesamt wird das Schabelement somit vorzugsweise sowohl relativ zum ersten, rotierenden Begrenzungselement, als auch relativ zum zweiten, ruhenden Begrenzungselement bewegt, vorzugsweise rotiert.

Das mindestens eine Schabelement ist vorzugsweise mit einem ringförmigen Träger verbunden, welcher sich unmittelbar an das erste Begrenzungselement bzw. den Boden des Mahlwerks anschließt und mittels einer Antriebseinrichtung, etwa dem Mahlwerksmotor um dieses erste Begrenzungselement herum rotierbar ist. Ausgehend von dem ringförmigen Träger erstreckt sich das Schabelement stegartig über einen Bereich des ersten Begrenzungselements. Das Schabelement weist vorzugsweise eine derartige Ausdehnung, insbesondere in radialer Richtung, auf, dass ein Abstreifen von Pulver über einen Großteil der Fläche, vorzugsweise über nahezu die gesamte Fläche des ersten Begrenzungselements bzw. des Boden des Mahlwerks erfolgen kann. Das stegartig ausgebildete Schabelement ist dabei vorzugsweise gegenüber dem Durchmesser des ersten Begrenzungselements geneigt ausgebildet, so dass es eine Richtungskomponente hat, die sich dem auf dem rotierenden ersten Begrenzungselement befindlichen Pulver entgegenstreckt. Auf dem rotierenden Begrenzungselement befindliches Pulver wird von dem vorzugsweise mit geringerer Drehzahl rotierenden Schabelement gebremst und abgestreift. Auf einem inneren Radius befindliches Pulver trifft dabei eher auf das Schabelement als auf einem weiter außen befindliches Pulver mit gleicher Winkelkoordinate. Die derart geneigte Ausbildung des Schabelements unterstützt dabei die gewünschte Beförderung des Pulvers nach außen in Richtung der seitlichen Begrenzung der Mahlvorrichtung, wo sich die Öffnung zum Pulverschacht befindet. Im Übrigen verringert diese geneigte Ausrichtung des Schabelements dessen mechanischen Widerstand und die Gefahr eines Brechens oder Blockierens.

Das mindestens eine Schabelement ist derart ausgebildet und angeordnet, dass die erste Schabfläche zu dem ersten Begrenzungselement einen derartig geringen Abstand aufweist, dass Pulver vom ersten Begrenzungselement wirksam abgestreift werden kann. Der Abstand der ersten Schabfläche zu dem ersten Begrenzungselement bleibt dabei entlang der Erstreckung des stegartigen Schabelements weitgehend konstant, ebenso bei Rotation, d.h. bei beliebiger Winkelstellung des Schabelements relativ zum ersten Begrenzungselement. Der Abstand liegt zweckmäßigerweise im Submilimeterbereich, typischerweise im Bereich einiger µm bis einiger 100 µm.

Analoges gilt vorzugsweise für den Abstand der zweiten Schabfläche zum zweiten Begrenzungselement sowie für den Abstand der dritten Schabfläche zum zweiten Mahlelement.

Prinzipiell ist es ausreichend, wenn die Mahlvorrichtung ein einziges Schabelement aufweist, es hat jedoch Vorteile, wenn zwei oder mehr erfindungsgemäß ausgebildete Schabelemente vorhanden sind, welche jeweils von unterschiedlichen Stellen vom ringförmigen Träger ausgehen und sich jeweils stegartig über einen Bereich des ersten Begrenzungselements erstrecken.

Das zweite Mahlelement ist typischerweise als zylinderförmiger Mahlring des Kegelmahlwerks in Form eines Zahnkranzes ausgebildet. Er wird in der Regel nicht rotiert. Typischerweise bietet er Einstellmöglichkeiten, wodurch der Mahlgrad eingestellt bzw. verändert werden kann. In Richtung des Mahlwerksbodens hat das zweite Mahlelement eine Kopfseite, an deren ringförmige Fläche in konventionellen Getränkebereitern ebenfalls leicht Pulver anhaften bleiben kann. Zusätzlich weist das Schabelement hierfür vorzugsweise daher noch eine weitere Schabfläche auf, die so angeordnet ist, dass am zweiten Mahlelement anhaftendes Pulver mit dem Schabelement von dem zweiten Mahlelement abgestreift werden kann. Hierfür weist diese weitere Schabfläche eine derartige Ausdehnung in radialer Richtung auf, dass sie zumindest nahezu an der gesamten ringförmigen Fläche der Kopfseite des zweiten Mahlelements entlang streichen kann.

In einem weiteren Aspekt der Erfindung wird vorgeschlagen, bei einem Getränkebereiter der eingangs genannten Art, also einem Getränkebereiter mit einer mit Mahlgut, insbesondere Kaffeebohnen, beschickbaren Mahlvorrichtung, aufweisend ein Mahlwerk mit einem während eines Mahlvorgangs rotierenden ersten Mahlelement und mit einem zweiten Mahlelement, eine Öffnung zu einem Pulverschacht, durch den gemahlenes Pulver aus der Mahlvorrichtung zu einer Brüheinheit gelangen kann, und ein erstes, rotierbares Begrenzungselement zum Heraustreiben von Kaffeepulver aus der Öffnung, ein Verbleiben von gemahlenem Mahlgut im Getränkebereiter nach Abschluss des Mahlvorgangs dadurch zu vermeiden oder dessen Menge zu verringern, dass der Einlass in die Brüheinheit im Vergleich zur Öffnung der Mahlvorrichtung in geringerer Höhe angeordnet wird. Der Weg von der Öffnung der Mahlvorrichtung zu Brüheinrichtung durch den Pulverschacht weist somit ein Gefälle auf, so dass die Schwerkraft des gemahlenen Pulvers einem Verbleiben von gemahlenem Pulver im Pulverschacht entgegenwirkt. Vorzugsweise werden die beiden Aspekte miteinander verbunden.

Der Pulverschacht sollte derart geneigt und ausgebildet sein, dass aus der Mahlvorrichtung durch die Öffnung in den Pulverschacht gelangtes gemahlenes Pulver durch seine Schwerkraft zur Brüheinheit bewegt wird. Gleichzeitig sollte die Kompaktheit des Getränkebereiters gewahrt bleiben. Es ist vorteilhaft, wenn der Pulverschacht gegenüber der Horizontalen um mindestens 25°, vorzugsweise zwischen 30 und 70 ° geneigt ist.

Zusätzlich kann am Pulverschacht ein Impulsgeber angeordnet ist, mit dem ein oder mehrere mechanische Impulse auf den Pulverschacht übertragen werden können, d.h. z.B. eine oder mehrere Erschütterungen oder Vibrationen am Pulverschacht erzeugt werden können. Auf diese Weise können an den Innenseiten des Pulverschachts anhaftende Pulverreste gelockert und somit die Rutschbewegung des Pulvers in die Brüheinheit unterstützt werden. Der Impulsgeber kann beispielsweise als Vibrator oder Klopfer ausgebildet sein.

Darüber hinaus kann dem Verbleiben von Pulverresten im Mahlwerk und/oder im Pulverschacht auch dadurch weiter entgegengewirkt werden, indem antistatische Materialien verwendet werden, mit denen eine statische Aufladung des gemahlenen Pulvers vermieden oder abgeschwächt werden kann, d.h. die Mahlvorrichtung und/oder der Pulverschacht bestehen mindestens bereichsweise aus antistatischen Materialien, enthalten diese oder sind mit solchen beschichtet.

Geeignet sind z. B. ein POM-Copolymer, PP oder antistatisch gefüllte Kunststoffe. Eine Alternative besteht darin, den konventionell eingesetzten Kunststoff PA zumindest in Teilbereichen, insbesondere an der Außenwand des Mahlwerksgehäuses am Übergang zum Pulverschacht, mit einer Chrom-Nickel-Schicht zu überziehen. Im Übrigen kann der Pulverschacht auch aus einem Edelstahlblech geformt werden.

Ein Ausführungsbeispiel der Erfindung ist in den Zeichnungen rein schematisch dargestellt und wird nachfolgend näher beschrieben. Es zeigt
- Figur 1: eine schematische Darstellung eines Ausschnittes des erfindungsgemäßen Getränkebereiters mit Mahlvorrichtung und Brüheinheit,
- Figur 2: eine schematische Darstellung der inneren Anordnung der Mahlvorrichtung
- Figur 3: eine Darstellung der Schabelemente und des ringförmigen Trägers in mehreren Ansichten und Schnitten,
- Figur 4: eine Explosionsdarstellung eines Teils der Mahlvorrichtung und des Pulverschachts

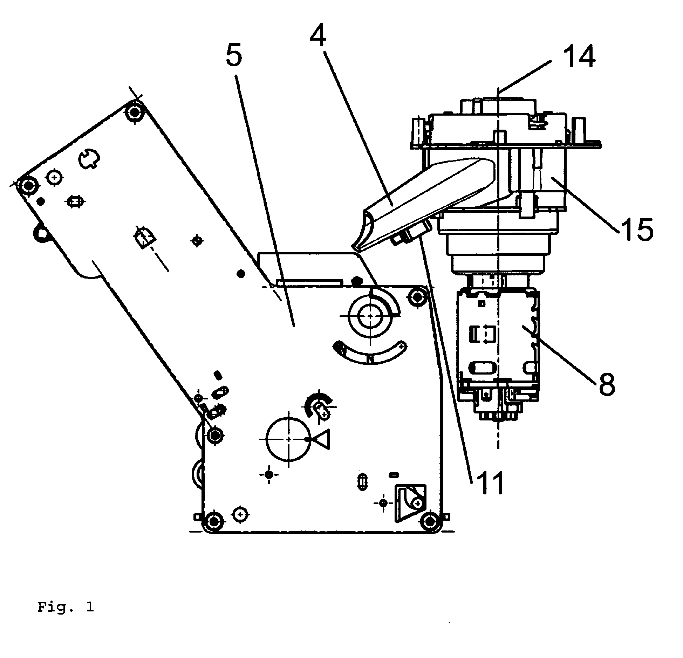

Figur 1 zeigt die Mahlvorrichtung 15 mit einem Mahlwerk, welches durch eine Antriebseinrichtung, einen Mahlwerksmotor 8, angetrieben wird, so dass zumindest ein Mahlelement um die Rotationsachse 14 rotiert. Der Pulverschacht 4 verbindet die Mahlvorrichtung 15, ausgehend von deren (in Figur 1 nicht erkennbaren) Öffnung 3, mit der Brüheinheit 5. Der Einlass in die Brüheinheit 5 ist dabei im erfindungsgemäßen Getränkebereiter in geringerer Höhe angeordnet als die Öffnung 3 der Mahlvorrichtung 15. Der Pulverschacht 4 schließt daher mit der Horizontalen einen Winkel von 30 ° ein. An seiner Außenseite ist ein Impulsgeber 11 in Form eines Vibrators angebracht, alternativ könnte z.B. auch ein Klopfer Verwendung finden.

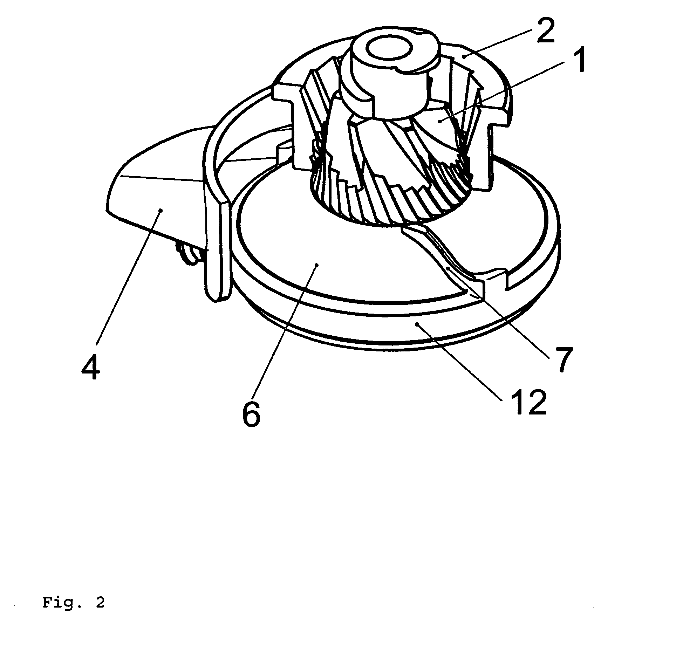

Die Mahlvorrichtung 15 wird durch Figur 2 weiter erläutert. Die Mahlvorrichtung 15 weist ein Kegelmahlwerk auf, welches zwei Mahlelemente, nämlich einen Mahlkegel 1 und einen Mahlring 2, umfasst, die in einem Mahlwerksgehäuse untergebracht sind. Der zylinderförmige Mahlring 2 ist hier zur besseren Anschaulichkeit lediglich hälftig dargestellt. Das Mahlwerksgehäuse wird nach unten von einem ersten Begrenzungselement, dem Boden 6 begrenzt. Während eines Mahlvorgangs treibt ein in Figur 1 dargestellter Mahlwerksmotor 8 den Mahlkegel 1 an und rotiert diesen innerhalb des ruhenden Mahlrings 2. Mahlgut, wie etwa Kaffebohnen, die von oben in das Mahlwerk eingeleitet werden, werden im Innern des Mahlwerks durch Zusammenwirken des Mahlkegels 1 und des Mahlrings 2 zerkleinert. Der Boden 6 wird ebenfalls durch den Mahlwerksmotor 8 angetrieben und rotiert synchron mit dem Mahlkegel 1. Gemahlenes Pulver, welches den Bereich der Mahlelemente 1,2 nach unten verlässt und sich auf dem Boden 6 niederlässt, übernimmt die Rotationsbewegung des Bodens 6 und erfährt dabei eine nach außen wirkende Zentrifugalkraft. Dadurch wird ein Teil des gemahlenen Pulvers durch eine seitlich in einem zweiten Begrenzungselement, der Mahlwerksgehäusewand 10, von der ebenfalls aus Gründen der Anschaulichkeit nur ein kleiner Teil dargestellt ist, in der Höhe des Bodens 6 befindlichen Öffnung 3 aus der Mahlvorrichtung 15 in den Pulverschacht 4 getrieben.

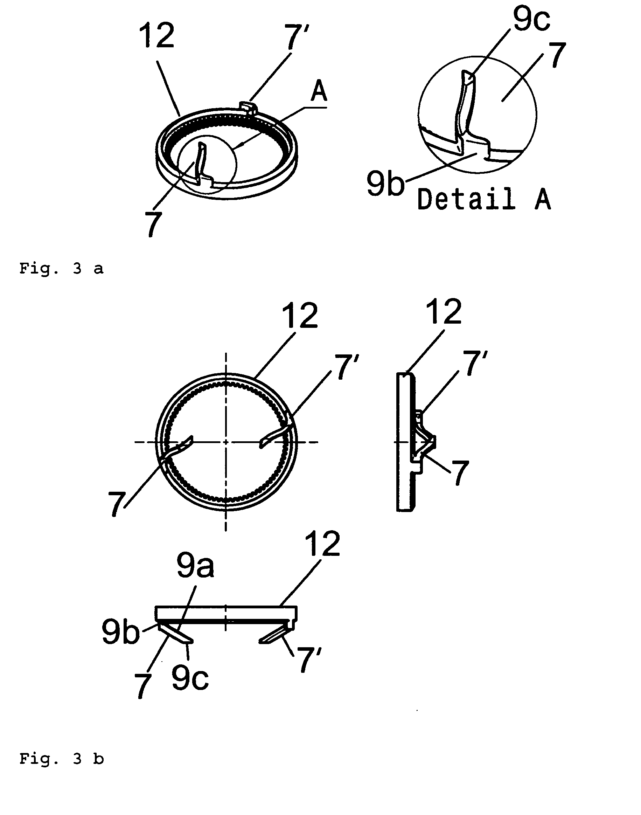

Die in Figur 2 gezeigte Mahlvorrichtung 15 weist darüber hinaus ein Schabelement 7 auf. Dieses Schabelement 7 ist an einem ringförmigen Träger 12 angebracht, welcher sich an erste Begrenzungselement 6 des Mahlwerksgehäuses, unmittelbar diesen umschließend, anschließt. Der ringförmige Träger 12 ist den in Figuren 3a und 3b nochmals einzeln, d.h. ohne Mahlwerk dargestellt, wobei dort - ohne Beschränkung der Allgemeinheit - zwei Schabelemente 7,7' vorhanden sind, welche an gegenüberliegenden Stellen an dem ringförmigen Träger 12 angebracht sind. Figur 3a zeigt eine isometrische Ansicht des ringförmigen Trägers 12 mit den Schabelementen 7 und 7' sowie einen vergrößerten Ausschnitt daraus mit dem Schabelement 7; Figur 3a zeigt eine Aufsicht des entsprechenden ringförmigen Trägers 12 mit den Schabelementen 7 und 7' und zwei Querschnittsdarstellungen. Ausgehend vom ringförmigen Träger 12 überspannen die Schabelemente 7,7' stegartig einen Bereich des Bodens 6 wie in Figur 2 gezeigt. Dabei erstrecken sich die Schabelemente 7,7' nicht entlang eines Durchmessers des ringförmigen Trägers 12 sondern sind, wie insbesondere Figur 3b zu entnehmen, einem solchen gegenüber angestellt ausgerichtet, d.h. die Erstreckungsrichtung verläuft im Wesentlichen entlang einer Kreissehne des ringförmigen Trägers 12.

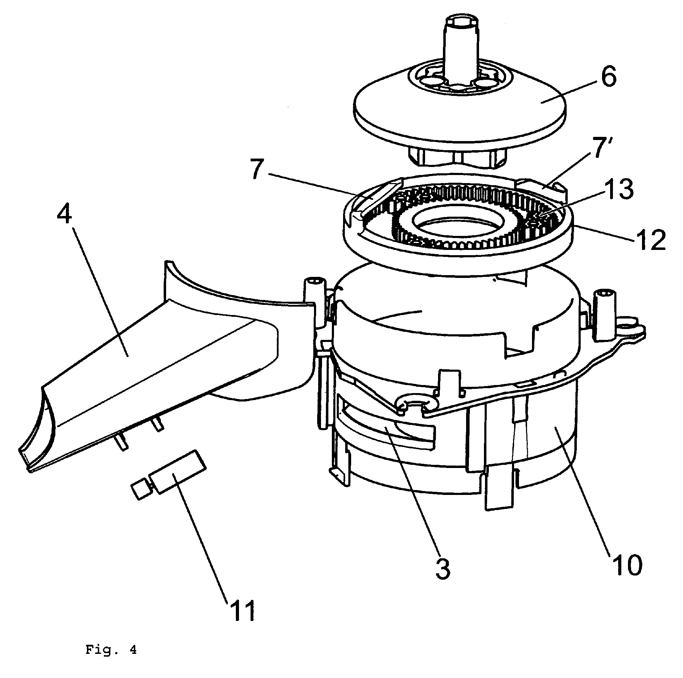

Die Schabelemente 7,7' weisen jeweils drei Schabflächen 9a,9b,9c auf; eine erste Schabfläche 9a ist dabei dem ersten Begrenzungselement, d.h. dem Boden 6 zugeordnet, eine zweite Schabfläche 9b ist dem zweiten Begrenzungselement, nämlich der seitlichen Mahlwerksgehäusewand 10, zugeordnet und eine dritte Schabfläche 9c ist der unteren, ringförmigen Kopfseite des Mahlrings 2 zugeordnet. Der ringförmige Träger 12 weist, wie in Figur 3 zu erkennen, eine Innenverzahnung auf. Mittels dieser wird der ringförmige Träger 12 über ein in der Explosionsdarstellung von Figur 4 gezeigtes Planetengetriebe 13 vom Mahlwerksmotor 8 angetrieben. Das Planetengetriebe 13 ist dabei so ausgebildet, dass der ringförmige Träger 12 inklusive der an ihm angebrachten Schabelemente 7,7' mit geringerer Drehzahl rotiert als der Boden 6 des Mahlwerksgehäuses, so dass er sowohl eine Rotationsbewegung relativ zu den festgehaltenen Teilen der Mahlvorrichtung 15, wie etwa dem Mahlring 2 und der seitlichen Mahlwerksgehäusewand 10 vollzieht als auch relativ zu dem Boden 6 des Mahlwerksgehäuses.

Während eines Mahlvorgangs werden somit gemeinsam mit dem Mahlkegel 1 einerseits der Boden 6 des Mahlwerksgehäuses als auch - mit geringerer Drehzahl - die beiden Schabelemente 7,7' mitrotiert. Die Schabelemente 7,7' werden dabei in geringem Abstand mit ihren Schabflächen 9a,9b,9c an den jeweils zugeordneten Elementen der Mahlvorrichtung 15 entlanggeführt, d.h. mit der ersten Schabfläche 9a am Boden 6, mit der zweiten Schabfläche 9b an der seitlichen Mahlwerksgehäusewand 10 und mit der dritten Schabfläche 9c an der unteren, ringförmigen Kopfseite des Mahlrings 2. Dabei wird an den jeweiligen Elementen der Mahlvorrichtung 15 haftendes Pulver durch die Schabelemente 7,7' abgestreift.

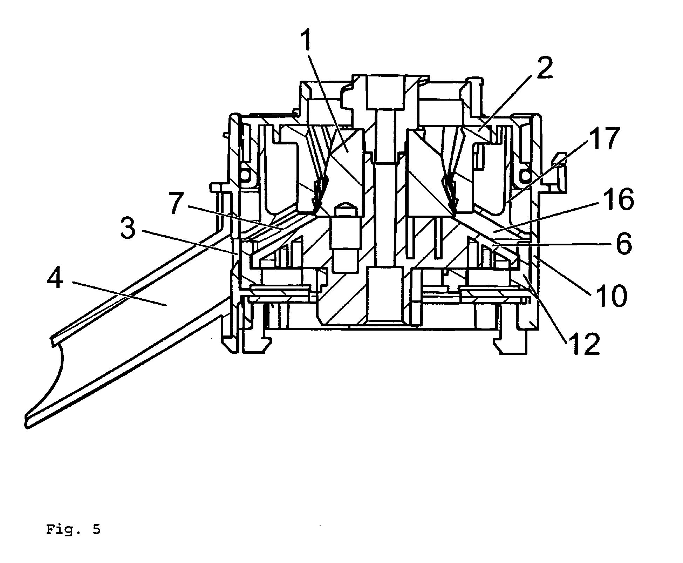

Wie etwa in Figur 4 und auch in Figur 5, welche einen Querschnitt der Mahlvorrichtung 15 zeigt, zu erkennen, ist das erste Begrenzungselement, der rotierende Boden 6, des Mahlwerksgehäuses nach außen hin abfallend, entsprechend eines Kegelstumpfmantels ausgebildet, wodurch die Bewegung des Pulvers in Richtung der Öffnung 3 zum Pulverschacht 4 unterstützt wird. Die Schabelemente 7,7' sind an diese Neigung des Bodens 6 angepasst, so dass der Abstand zum Boden 6 entlang der Erstreckung der Schabelemente 7,7' in etwa gleich bleibt. Im zusammengebauten Zustand endet der Boden 6 fluchtend in Höhe der Unterseite der Öffnung 3, an die sich der Pulverschacht 4 anschließt. Figur 4 zeigt auch das Planetengetriebe 13, welches ein zentrales, den Mahlkegel 1 sowie den Boden 6 antreibendes Zahnrad aufweist, in das mehrere Planetenräder eingreifen, in welche wiederum ein äußeres Hohlrad, gebildet durch den ringförmigen Träger 12 und dessen Innenverzahnung, eingreift.

Wie in Figur 5 zu entnehmen, nimmt das Schabelement 7 den größten Teil des Querschnitts des für das gemahlene Pulver zur Verfügung stehenden Raumes 16 im Mahlwerksgehäuse ein, welcher von dem ersten Begrenzungselement 6, dem zweiten Begrenzungselement 10, dem Mahlring 2 und nach oben hin von noch einem weiteren Begrenzungselement 17 des Mahlwerksgehäuses begrenzt wird. Lediglich ein kleinerer Teil des Querschnitts, nämlich im Wesentlichen ein oberhalb des Schabelements 7, d.h. zwischen dem Schabelement 7 und dem weiteren Begrenzungselement 17 befindlicher Bereich, wird von dem Schabelement 7 während einer Rotation nicht durchfahren. Zu dem ersten Begrenzungselement 6, dem zweiten Begrenzungselement 10 und dem Mahlring 2 ist der Abstand des Schabelements mit den jeweils zugeordneten Schabflächen 9a,9b,9c so gering, dass das auf diesen Elementen befindliche oder daran anhaftende Pulver wirksam abgestreift wird. Lediglich zu dem weiteren Begrenzungselement 17 ist dieser Abstand größer, insbesondere um eine Blockade zu vermeiden. Bei Rotation des Schabelements 7 wird das Pulver somit effektiv aus dem für das gemahlene Pulver zur Verfügung stehenden Raum 16 durch die Öffnung 3 in den Pulverschacht 4 getrieben.

## Patentansprüche

1. Getränkebereiter, insbesondere Kaffeemaschine, mit einer mit Mahlgut, insbesondere Kaffeebohnen, beschickbaren Mahlvorrichtung (15), aufweisend
ein Mahlwerk mit einem während eines Mahlvorgangs rotierenden ersten Mahlelement (1) und mit einem zweiten Mahlelement (2),
eine Öffnung (3) zu einem Pulverschacht (4), durch den gemahlenes Pulver aus der Mahlvorrichtung zu einer Brüheinheit (5) gelangen kann,
und ein erstes, rotierbares Begrenzungselement (6) zum Heraustreiben von Kaffeepulver aus der Öffnung (3), wobei
die Mahlvorrichtung (15) mindestens ein Schabelement (7,7') aufweist, das relativ
zu dem ersten Begrenzungselement (6) bewegt werden kann und eine erste Schabfläche (9a) aufweist, die so angeordnet ist, dass am ersten Begrenzungselement (6) anhaftendes oder darauf befindliches Pulver mit dem Schabelement (7,7') von dem ersten Begrenzungselement (6) abgestreift werden kann.

2. Getränkebereiter nach Anspruch 1,
**dadurch gekennzeichnet,**
**dass** eine Antriebseinrichtung (8) vorhanden ist, mittels der das mindestens eine Schabelement (7,7') rotiert werden kann.

3. Getränkebereiter nach Anspruch 1 oder 2,
**dadurch gekennzeichnet,**
**dass** das Schabelement (7,7') und das erste Begrenzungselement (6) von derselben Antriebseinrichtung (8) antreibar sind.

4. Getränkebereiter nach mindestens einem der vorgenannten Ansprüche,
**dadurch gekennzeichnet,**
**dass** das Schabelement (7,7') relativ zum erstem Begrenzungselement (6) mit derselben oder entgegengesetzter Rotationsachse (12), aber geänderter, vorzugsweise verringerter Drehzahl rotiert werden kann.

5. Getränkebereiter nach mindestens einem der vorgenannten Ansprüche,
**dadurch gekennzeichnet,**
**dass** die Mahlvorrichtung zumindest ein zweites, feststehendes Begrenzungselement (10) aufweist und dass das Schabelement (7,7') relativ zu dem zweiten Begrenzungselement (10) bewegt werden kann und eine zweite Schabfläche (9b) aufweist, die so angeordnet ist, dass am zweiten Begrenzungselement (10) anhaftendes Pulver mit dem Schabelement (7,7') von dem zweiten Begrenzungselement (10) abgestreift werden kann.

6. Getränkebereiter nach mindestens einem der vorgenannten Ansprüche,
**dadurch gekennzeichnet,**
**dass** das Schabelement (7,7') relativ zu dem zweiten Mahlelement (2) bewegt werden kann und eine dritte Schabfläche (9c) aufweist, die so angeordnet ist, dass am zweiten Mahlelement (2) anhaftendes Pulver mit dem Schabelement (7,7') von dem zweiten Mahlelement (2) abgestreift werden kann.

7. Getränkebereiter nach mindestens einem der vorgenannten Ansprüche,
**dadurch gekennzeichnet,**
**dass** das Mahlwerk ein Kegelmahlwerk ist und das erste Begrenzungselement (6) nach außen abfallend, insbesondere entsprechend eines Kegelstumpfmantels ausgebildet ist.

8. Getränkebereiter nach mindestens einem der vorgenannten Ansprüche,
**dadurch gekennzeichnet,**
**dass** der Einlass in die Brüheinheit (5) im Vergleich zur Öffnung (3) der Mahlvorrichtung (15) in geringerer Höhe angeordnet ist.

9. Getränkebereiter nach dem vorhergehenden Anspruch,
**dadurch gekennzeichnet,**
**dass** der Pulverschacht (4) derart geneigt und ausgebildet ist, dass aus der Mahlvorrichtung durch die Öffnung (3) in den Pulverschacht (4) gelangtes gemahlenes Pulver durch seine Schwerkraft zur Brüheinheit (5) bewegt wird.

10. Getränkebereiter nach mindestens einem der vorgenannten Ansprüche,
**dadurch gekennzeichnet,**
**dass** der Pulverschacht (4) gegenüber der Horizontalen um mindestens 25°, vorzugsweise zwischen 30 und 70° geneigt ist.

11. Getränkebereiter nach mindestens einem der vorgenannten Ansprüche,
**dadurch gekennzeichnet,**
**dass** am Pulverschacht (4) ein Impulsgeber (11) angeordnet ist, mit dem eine oder mehrere Erschütterungen oder Vibrationen am Pulverschacht (4) erzeugt werden können.

12. Getränkebereiter nach mindestens einem der vorgenannten Ansprüche,
**dadurch gekennzeichnet,**
**dass** die Mahlvorrichtung (15) und/oder der Pulverschacht (4) mindestens bereichsweise aus antistatischen Materialien bestehen, diese enthalten oder mit solchen beschichtet sind.

## Claims

1. Beverage preparation means, more particularly a coffee machine, having a grinding device (15) which can be loaded with items to be ground, more particularly coffee beans, comprising
a grinder having a first grinding element (1) which rotates during a grinding process and a second grinding element (2),
an opening (3) to a powder chute (4) through which ground powder from the grinding device can reach a brewing unit (5),
and a first, rotatable delimiting element (6) for driving coffee powder out of the opening (3), wherein the grinding device (15) comprises at least one scraping element (7, 7') which is movable relative to the first delimiting element (6) and comprises a first scraping surface (9a) which is arranged such that powder on or sticking to the first delimiting element (6) can be removed from said first delimiting element (6) by the scraping element (7, 7').

2. Beverage preparation means according to claim 1,
**characterised in that**
it comprises a drive device (8) by means of which the at least one scraping element (7, 7') can be rotated.

3. Beverage preparation means according to either claim 1 or claim 2,
**characterised in that**
the scraping element (7, 7') and the first delimiting element (6) can be driven by the same drive device (8).

4. Beverage preparation means according to at least one of the preceding claims, **characterised in that**
the scraping element (7, 7') is rotatable relative to the first delimiting element (6) using the same or the opposite axis of rotation (12), but a modified, preferably reduced, rotational speed.

5. Beverage preparation means according to at least one of the preceding claims, **characterised in that**
the grinding device comprises at least one second, stationary delimiting element (10) and **in that** the scraping element (7, 7') is movable relative to the second delimiting element (10) and comprises a second scraping surface (9b) which is arranged such that powder sticking to the second delimiting element (10) can be removed from said second delimiting element (10) by the scraping element (7, 7').

6. Beverage preparation means according to at least one of the preceding claims, **characterised in that**
the scraping element (7, 7') is movable relative to the second grinding element (2) and comprises a third scraping surface (9c) which is arranged such that powder sticking to the second grinding element (2) can be removed from said second grinding element (2) by the scraping element (7, 7').

7. Beverage preparation means according to at least one of the preceding claims, **characterised in that**
the grinder is a conical grinder and the first delimiting element (6) slopes outwards and in particular is formed in the manner of the surface of a truncated cone.

8. Beverage preparation means according to at least one of the preceding claims, **characterised in that**
the inlet into the brewing unit (5) is arranged so as to be lower compared to the opening (3) in the grinding device (15).

9. Beverage preparation means according to the preceding claim,
**characterised in that**
the powder chute (4) is formed and inclined such that ground powder arriving from the grinding device through the opening (3) into the powder chute (4) can be moved by the force of gravity to the brewing unit (5).

10. Beverage preparation means according to at least one of the preceding claims, **characterised in that**
the powder chute (4) is inclined relative to the horizontal by at least 25°, preferably by between 30 and 70°.

11. Beverage preparation means according to at least one of the preceding claims, **characterised in that**
on the powder chute (4) a pulse generator (11) is arranged which can generate one or more shaking movements or vibrations on the powder chute (4).

12. Beverage preparation means according to at least one of the preceding claims, **characterised in that**
the grinding device (15) and/or the powder chute (4) consist of, contain, or are coated with anti-static materials, at least in regions.

## Revendications

1. Préparateur de boissons, en particulier machine à café, avec un dispositif de mouture (15) pouvant être alimenté avec un produit à moudre, en particulier des grains de café, présentant
un moulin avec un premier élément de mouture (1) tournant pendant un processus de mouture et avec un deuxième élément de mouture (2),
une ouverture (3) vers une trappe à poudre (4) à travers laquelle de la poudre moulue en provenance du dispositif de mouture peut parvenir à une unité d'infusion (15),
et un premier élément de limitation (6) rotatif pour l'extraction de la poudre de café à partir de l'ouverture (3), dans lequel
le dispositif de mouture (15) présente au moins un élément de raclage (7, 7') qui peut être déplacé relativement au premier élément de limitation (6) et présente une première surface de raclage (9a) qui est disposée de telle sorte que la poudre adhérant au premier élément de limitation (6) ou se trouvant sur cet élément peut être enlevée du premier élément de limitation (6) avec l'élément de raclage (7, 7').

2. Préparateur de boissons selon la revendication 1,
**caractérisé en ce**
**qu'**il existe un dispositif d'entraînement (8) au moyen duquel l'élément de raclage (7, 7') au moins au nombre de un peut être mis en rotation.

3. Préparateur de boissons selon la revendication 1 ou 2,
**caractérisé en ce que**
l'élément de raclage (7, 7') et le premier élément de limitation (6) peuvent être entraînés par le même dispositif d'entraînement (8).

4. Préparateur de boissons selon au moins une des revendications précitées, **caractérisé en ce que**
l'élément de raclage (7, 7') peut être mis en rotation relativement au premier élément de limitation (6) avec le même axe de rotation (12) ou un axe de rotation opposé, mais avec une vitesse de rotation modifiée, de préférence réduite.

5. Préparateur de boissons selon au moins une des revendications précitées, **caractérisé en ce que**
le dispositif de mouture présente au moins un deuxième élément de limitation (10) stationnaire, et **en ce que** l'élément de raclage (7, 7') peut être déplacé relativement au deuxième élément de limitation (10) et présente une deuxième surface de raclage (9b) qui est disposée de telle sorte que la poudre adhérant au deuxième élément de limitation (10) peut être enlevée du deuxième élément de limitation (10) avec l'élément de raclage (7, 7').

6. Préparateur de boissons selon au moins une des revendications précitées, **caractérisé en ce que**
l'élément de raclage (7, 7') peut être déplacé relativement au deuxième élément de mouture (2) et présente une troisième surface de raclage (9c) qui est disposée de telle sorte que la poudre adhérant au deuxième élément de mouture (2) peut être enlevée du deuxième élément de mouture (2) avec l'élément de raclage (7, 7').

7. Préparateur de boissons selon au moins une des revendications précitées, **caractérisé en ce que**
le moulin est un moulin conique et le premier élément de limitation (6) est constitué de façon descendante vers l'extérieur, en particulier de façon correspondante à une enveloppe tronconique.

8. Préparateur de boissons selon au moins une des revendications précitées, **caractérisé en ce que**
l'entrée dans l'unité d'infusion (5) est, en comparaison avec l'ouverture (3) du dispositif de mouture (15), disposée à une moindre hauteur.

9. Préparateur de boissons selon la revendication précédente,
**caractérisé en ce que**
la trappe à poudre (4) est inclinée et constituée de telle sorte que la poudre moulue parvenue dans la trappe à poudre (4) à partir du dispositif de mouture à travers l'ouverture (3) est déplacée vers l'unité d'infusion (5) sous l'action de sa force de gravité.

10. Préparateur de boissons selon au moins une des revendications précitées, **caractérisé en ce que**
la trappe à poudre (4) est, par rapport à l'horizontale, inclinée d'au moins 25°, de préférence entre 30 et 70°.

11. Préparateur de boissons selon au moins une des revendications précitées, **caractérisé en ce**
**qu'**un générateur d'impulsions (11) est disposé sur la trappe à poudre (4), au moyen duquel une ou plusieurs secousses ou vibrations peuvent être produites sur la trappe à poudre (4).

12. Préparateur de boissons selon au moins une des revendications précitées, **caractérisé en ce que**
le dispositif de mouture (15) et/ou la trappe à poudre (4) sont, au moins par tronçons, composés de matériaux antistatiques, contiennent ces matériaux ou sont revêtus de tels matériaux.
